# EUROPEAN PATENT SPECIFICATION

(11) **EP 1 419 041 B1**
(45) Date of publication and mention of the grant of the patent: **03.05.2006**
(21) Application number: 02758696.5
(22) Date of filing: 16.08.2002
(51) Int. Cl.: B29C 47/00, B29C 47/40, B29C 47/50, B29B 7/48

(54) **MIXING AND KNEADING DEVICE FOR POLYMER COMPOSITIONS**
MISCH- UND KNETVORRICHTUNG FÜR KUNSTSTOFFE
DISPOSITIF POUR PETRIR ET MELANGER DES COMPOSITIONS POLYMERES

(30) Priority: 21.08.2001 IT TO20010820
(43) Date of publication of application: 19.05.2004
(73) Proprietor: Ponzielli, Giuseppe, 21033 Cittiglio (IT)
(72) Inventor: Ponzielli, Giuseppe, 21033 Cittiglio (IT)
(74) Representative: Ritscher, Thomas
(86) International application number: PCT/IB2002/003315
(87) International publication number: WO 2003/018288

(56) References cited:
- EP-A- 0 907 492
- EP-A- 1 002 633
- EP-A- 1 099 525
- US-A- 3 746 489
- US-A- 4 746 478

## Description

### BACKGROUND OF THE INVENTION

### Field of the Invention

The present invention generally relates to processing of viscous compositions, preferably but not exclusively to plasticated polymer compositions, such as normally solid thermoplastic polymers at extrusion temperatures of typically in the range of from about 150 - 300°C.

A problem connected with such processing is uniform admixing of various types of additional components or additives with such polymer compositions. Generally, such admixing is effected when the polymer composition is in a plasticated or molten state. However, because of the generally high viscosities of polymer compositions at processing temperatures this is not without problems because fillers, such as glass fillers or fibers, which - while sometimes effective to mechanically reinforce the resulting products - are relatively fragile and tend to become comminuted or excessively disaggregated or disintegrated when exposed to forces generated upon mixing so that their maximum contribution to the quality of the final product produced is not attained.

### Prior Art

Various means and methods for effective admixing additives including fillers with polymer compositions are known in the art. In fact, many processors of the screw extruder type are used for this purpose but tend to comminute fragile fillers. Special mention deserve co-rotating twin screw extruders which are widely used for compounding thermoplastic polymers. Such devices have been developed over the past decades with increasing processing velocities, e.g. up to 1200 RPM, to satisfy highest throughput requirements. It may happen, however, that such high speed may conflict seriously with the desired quality for several applications, e.g. when a low or a very low processing speed is required to achieve a given quality. It would not be helpful, however, to use conventional plasticating mixers, such as co-rotating twin screw extruders, and to simply reduce the processing speed because at low or very low speeds melting conditions cannot be achieved. As known to those skilled in extrusion art, melting of polymers often needs a certain amount of frictional heat developed by the screws upon rotation; however, when operation speed is under a certain critical threshold, not enough frictional heat will be generated by the rotating screws, and not enough thermal energy for melting will be provided by the extrusion system. In other words, when using a conventional screw extruder where the same shaft effects both plastication and mixing, it will be difficult, at best, to simultaneously achieve an optimum speed for plastication as well as an optimum speed for mixing; this is due to the simple reason that such two optimal speeds will differ. However, a particular processor type termed "port device" for adding various constituents to viscous polymer compositions within an extruder is disclosed in EP-A-0 907 492 as well as in the references discussed therein, and EP-A-0 907 492 is incorporated herein for the purpose of disclosure and delimitation.

### OBJECTS AND BRIEF DEFINITION OF THE INVENTION

The problem of optimally admixing additional constituents to a polymer composition and, notably strain rate control of mixing systems, has not been solved in a satisfactory manner by the means and methods provided by the art.

Research leading to the present invention has indicated that effective control of both distributive effects as well as of dispersing effects of mixing devices and operations is needed for optimal product quality in the general sense that distributive effects are maintained strong while dispersing effects may be controlled between near zero and a maximum value, depending upon the nature of the processed system. In other words, what is required is a strain controlled mixing system also termed SCM herein below, where strain is defined as the product of the shear rate and the shearing time.

Accordingly, it is a general object of the present invention to overcome the limitations of prior art mixing means and methods and to provide strain controlled mixing. It has been found according to the invention that this aim can be achieved with an apparatus as defined in claim 1. Preferred apparatus embodiments have the features specified in claims 2 - 9.

Further, the invention provides for a method of strain-controlled mixing of a viscous fluid with a filler or pigment as specified in claim 10.

Preferred method embodiments are as specified in claims 11 and 12 while claims 13 - 15 specify a shaped article obtained by the method of claim 10.

EP 1 002 633 describes an apparatus in which a first and upstream processor is used to produce a stream of a molten/plastified thermoplastic resin which is fed into a second and downstream processor. This second processor is a co-rotating twin screw extruder having conveying portions as well as non-conveying portions arranged downstream of the conveying portions and is used as a port device for introducing a further constituent into the stream of molten thermoplastic resin produced in the upstream processor. However, since the constituent added is rubber which is kneaded and molten in the port device there is no separation of melting and admixing. Accordingly, strain controlled mixing cannot be achieved because the energy input into the port device must be sufficient to achieve both melting of the added constituent as well as mixing the resulting melt with the molten thermoplastic resin fed into the port device.

### DEFINITIONS AND PREFERRED EMBODIMENTS OF THE INVENTION

Co-rocating rotors according to the invention having mutually intermatching flight portions fitting into the cavity are well known in the art and are commercially available, typically in the form of elements for assembly on an elongated core with suitable recesses or protrusion and corresponding protrusions and recesses at the inside of the external elements of the rotors. Such elements may be of the conveying type (flights of various pitch angles) or non-conveying or kneading type. Whether or not an element of the conveying type is, in fact, conveying, depends upon the pitch angle which may be "positive" or "negative" in relation to the axis of rotation. In this context, the expressions "positive pitch angle" and "negative pitch angle" will be used herein as synonymous with 'positive pitch" and "negative pitch", respectively. Generally, a positive pitch will cause flow of material towards the outlet ("downstream direction") while a negative pitch will cause flow of material towards the inlet ("upstream direction").

Finally, the term "kneading elements" is used herein to refer to elements that may have the shape of conveying elements but with a helix angle is 90° so a to cause no flow in either direction. Conveying elements may have different pitch, and both conveying and kneading elements may have different length. The length or thickness of the kneading elements typically range between a few to a several millimeters, for example from 2 mm to 100 mm , depending on the required dispersing rate of mixing.

The terms "upstream" and "downstream" are intended herein to refer to the direction of flow of a viscous composition that is processed by means and methods according to the invention. For example, a processor (e.g. a plasticating extruder) that produces the feed or input for the port device is regarded as "upstream" with relation to the port device while a processor (e.g. a production extruder) receiving the viscous material plus admixed constituents from the port device will be regarded as "downstream". In that context, an extruder can be said to be a "screw-type processor" because of the generally helical configuration of the rotors. Processors that include two inter-matching rotors may be termed "twin screw processors" and can be operated in counter rotation or co-rotation as is well known in the art.

However, the term "processor" as used herein is by no means restricted to processors of the extruder type but is intended to include, inter alia, output or shaping devices for directly transforming the output material from the port device into a product, e.g. into a continuous or discontinuous extrudate, e.g. a granulate or another type of a masterbatch material. Further examples of downstream processors in an apparatus or plant according to the invention are output control devices, such as gear-operated melt pumps or screw flow valves.

Typically, rotors of twin-screw processors used for co-rotating operation have the same structures and dimensions but this is not a critical requirement per se but is preferred for practical reasons, such as economy and simplicity.

The terms "cavity" and "enclosure" relate to what is also called a "barrel", i.e. the outer member or housing of a screw-type processor. Again, matching barrels are obtainable commercially from various producers. Such housings may be provided and used with various types of temperature control devices, such as cooling means, and heaters.

According to a preferred embodiment, the first conveying flight portion of each of the rotors is formed by a first helical scraping flight portion having a positive pitch while the second non-conveying section of each of the intermeshing rotors is formed by a kneading element section or by a second helical scraping flight section having a negative pitch.

The terms "admixing", "mixing" and "mixtures" are used synonymously herein with such terms as "interblending", "blending", and "blend" and are intended to refer to any process that reduces non-uniformity of a composition that is formed of two or more constituents. This is an important step in polymer processing because mechanical, physical and chemical properties as well as product appearance generally are dependent upon the uniformity of the composition of a product. Typical examples of "mixing" as used herein involve both solid/liquid, liquid/liquid and gas/liquid systems, such as blending polymer compositions with color concentrates, fillers, gas*,* or other additives. Accordingly, "mixture" as result of a mixing step is defined herein as the state formed by a composition of two or more ingredients which may but need not bear a fixed proportion to one another and which, however commingled, may but need not be conceived as retaining a separate existence. Generally, a mixing step according to the invention is an operation which is intended to reduce non-uniformity of a mixture.

Dispersion of carbon black or organic pigments, agglomerates or clusters in a viscous melt, e.g. of a polyalkene, such as polyethylene and polypropylene, is a typical and important example of a solid/liquid mixing operation according to the invention while blending of polymer melts is an example of liquid/liquid distributing operation according to the invention. Further, mixing a gaseous component, e.g. nitrogen, into an LDPE polymer viscous matrix to achieve foamed products is another example of gas/liquid mixing operation, according to the invention. Such operations are dominated by one overriding factor: the viscosity of such systems.

From this context it is apparent that compositions with very high viscosities, say in the range of up to 10'000 Pa·s or above are regarded as "liquid" for the purposes of the invention provided that such compositions are capable of being processed in extruder-type processing means which include suitable temperature control to maintain processability of a given composition. Further, while polymer compositions are preferred examples for use according to the invention, other types of viscous compositions of matter, such as sludges and tars, are considered for processing in a port device according to the invention.

The term "polymer composition" as used herein is intended to include both synthetic as well as natural and semi-synthetic polymers. The term "polymer" is used synonymously with "macromolecular substances" and includes any type of polymer, such as homopolymers, copolymers, graft polymers and any mixtures thereof including mixtures with substances that are not polymeric but monomeric or oligomeric, such as various types of plasticizers, fillers, stabilizers, and other additives used in processing. The term "plasticating" or "plastification" refers to transformation of a normally solid material into a "softened", "molten" or other viscous state. Typically, this is achieved by heating a polymer composition to a temperature where the composition becomes capable of flow.

In practice, the task of mixing an additional constituent with a viscous composition may range from an almost "pure distributive mixing" to a combination of "distributive-dispersing mixing". The term "distributive mixing" is used hereto indicate a mixing operation which promotes optimum spatial rearrangement of components so as to minimize non-uniformity of the composition while the term "dispersive mixing" is used here to indicates that type of mixing where a minimum mechanical energy amount has to be introduced in the mixing step for achieving the required mixing quality. For example, in a typical "soft mixing" case where hollow glass spheres are to be distributed in a polymer melt, the main problem to be solved is optimal distribution of such glass spheres in the polymer without affecting the integrity of the glass spheres which may be so brittle that mixing stress must be minimized.

Another example of the need to minimize mixing stress (mainly a shear stress) is required when mixing chopped glass strands with polymer melts. Strand filaments are often supplied in small bundles of thousands of chopped glass fibers held together by such additives as silanes normally used as sizing agents. etc. For example, bundles of chopped filaments of glass type "E" with a typical average length of 3 - 4,5 mm or 8 - 15 mm are commercially sold by major glass fiber manufacturers, and such chopped glass bundles must be subjected to a very small amount of shear stress during mixing so as to avoid glass fiber breakage.

Yet another typical case where a combination of a sufficient distributive effect is required in combination with a very high dispersing action is mixing organic pigments, e.g. phtalocyanine blue, with a polymer composition, e.g. molten LDPE, for producing a masterbatch or pigment concentrate. In this case, it is desirable to break up pigment clusters into individual pigment particles in the micrometer range. Optimal dispersion of the particles yields a higher color strength of the masterbatch and is essential for preventing pigment specks in the final products.

For many practical purposes, distributive effects should be high, in general, while dispersing effects require fine tuning between near zero and maximum. It should be noted in this context that in most continuous mixing devices for viscous polymer compositions, such as polymer melts, the flow mechanism is one of "drag flow" rather than positive displacement flow, or a shear flow mechanism because the flow is induced by shearing the liquid and not by displacing it. This concept is important because the basic law governing such flows is the well-known Newton Law of Viscosity. Further, shear flow happens to be a flow mechanism obtained in co-rotating twin screw extruders.

A strain controlled mixing (SCM) system provided by the invention is applicable to all types of blending of polymers, polymer alloys, addition of filling and reinforcing polymers, production of high quality masterbatches with very high pigment concentrations and other processes where prior art does not provide for optimal solutions. An essential and novel aspect SCM is the feature that the mixing processes may be controlled to provide anything from a very soft to a very hard dispersing rate of mixing as required by the particular use, either for producing finished articles, semifinished products, or pre-products such as pellets or masterbatches. In contrast to the art where plastication and mixing steps are normally performed by the same extruder which first melts the polymer and provides mixing downstream of plastication, an SCM system according to the invention is based upon separating the plastication stage from the mixing stage by using an upstream processor for generating the plasticated composition that is fed to a port device according to the invention for admixture with further constituents of the intended product.

A typical viscous composition of interest for the invention will preferably have a viscosity in the range of from about 50 to about 10.000 Pa·s for shear rates ranging between about 1 and about 1000 s⁻¹. In this context and with reference to any numeric value cited herein, the term "about" preceding such numerals generally is intended to include reasonable, positive or negative, variations of up to 30% of the given value.

Because of the dependence of viscosity from temperature and general processing requirements, processing temperatures in a port device according to the invention will preferably be selected in the range between the melting, or softening point, on the one hand and the temperature of thermal decomposition, at the other. For practical purposes, a preferred range of operating temperatures is between about 140 °C and about 320 °C for most thermoplastic polymers. It is to be emphasized, however, that application of the invention is not limited to thermally plasticated polymer compositions but is of use for processing of compositions that exhibit viscosity values in the above range at normal room temperature (25°C).

Another important concept connected with mixing is shear strain, i.e. the strain experienced by a fluid sheared for a certain time. Shear strain units may be defined as the product of the shear rate in units of s⁻¹ and the mixing time in seconds thus yielding a unit without a dimension. One and the same shear strain value may be composed of a wide variety of different shear rates and times. For example, 100 strain units may be composed either of a shear rate of 20 s⁻¹ and a time of 5 s, or vice versa, or by one of the infinite number of pair that yield a result of 100 upon multiplication. Of course, not all such strain combinations have the same mixing value. While it is intuitive that the role played by the time is similar for both distributive and dispersing mixing as it relates to the number of passages experienced by the melt composition through the mixing zones of interest, yet a proper shear rate may be a critical issue, mainly in the case of dispersive mixing. Since insufficient mixing time or insufficient shear rate may lead to an unacceptably low product quality - while an excessive time or shear rate my lead to polymer degradation and/or excessive processing costs - both mixing time and shear rate can be determined with very simple means by the operator on a case-by-case basis, in order to achieve an optimum result of a specific mixing task. This type of special control of mixing time and shear rate (mixer's speed) is what is referred to herein as a strain controlled mixing system (SCM).

An important property of a port device according to the invention is its inherent ability to provide an adjustable shearing rate by adjusting the speed of rotation when operating a port device according to the invention. Thus, typical speeds of rotation of the rotors in a port device according to the invention will be in the range from about 5 to about 600 rotations per minute (RPM) and preferably in the range of from about 5 to 300 rotations per minute (RPM).

Mixing times in a port device according to the invention will be dependent upon the geometry of the port device and the flow rate of the viscous composition that is fed to the port device. For that reason, the quality or geometry of an upstream device, e.g. a plasticating extruder, that produces the viscous composition may be a useful parameter in an apparatus according to a second general embodiment of the invention including a port device as a component in addition to an upstream processor for generating the viscous composition and a downstream processor for receiving the admixture produced by the port device and feeding it into a shaping step for obtaining a shaped product.

Thus, according to a preferred embodiment of the invention, the port device will have a relatively short axial length and a relatively wide screw diameter. Typically, a preferred port device and a preferred ratio between the length of the elongated cavity length and the diameter of the cavity (also termed L/D ratio) will be in the range of about 2 to about 20.

In that context, the ratio of the external diameter of the screw to the screw core diameter , also termed D/d ratio, (where the screw core equals to the external screw diameter reduced by twice the channel depth) will preferably be relatively high so as to allow for the largest mixing volume available with given overall dimensions of the port device. In practice the upper critical limit for such D/d ratio is given by the torque applicable on the rotor shafts and should be sufficiently high to produce rotor's torsion or deformation according to the well known laws of solid mechanics. It should be noted that for any given throughput a preferred port device according to the invention will be characterized by a torque which is rather small when compared with the torque applicable with conventional co-rotating twin screw extruder. This is due to the fact that in conventional devices both melting and maximum mixing must be effected while only mixing occurs in a port device. This results in a large ratio of the torque applied in a conventional co-rotating twin screw extruder while the torque applicable in a port device typically is in the order ranging from about 2 to about 4.

As a consequence of the aspects just mentioned, the D/d ratio in a port device according to the invention will be preferably in the range of from about 1,3 to about 3 and more preferably between about 1,4 and 2,5.

Again, with reference to an apparatus including a port device positioned between an upstream device for generating a viscous composition that is fed to a port device which, in turn feeds a downstream processor for producing a shaped article, it is preferred that the upstream processor also is a co-rotating twin screw extruder of the high speed type, e.g. capable of operating at speeds of up to 1200 RPM, and dedicated, in essence, to melt or plasticize the polymer to be fed into the port device; this provides an excellent melting rate in the most compact space for maximum process economy when using, for example, small diameter and high speed extruders. As an example, it has been found in the practice of the invention that an upstream co-rotating twin screw extruder of 40 mm diameter and a length of 10-15 diameters used to produce the feed for a port device according to the invention is typically capable of plasticating up to 0,3-0,4 kg per hour per rotation of typical polyolefins so as to yield an output of about 360 kg per hour to 480 kg per hour at 1200 RPM.

The port device according to the invention arranged downstream of the plasticating co-rotating twin screw processor should be designed for a corresponding input (e.g. 400 kg per hour) while having a diameter that is about 1 to about 5 times greater than the diameter of the upstream processor (e.g. 120 mm diameter) and a total length ranging from about 5 to about 15 times the diameter, depending upon the application.

Another ratio of interest in this connection is the ratio of the speed of rotation of the upstream processor (producing the feed for the port device) to the speed of rotation of the rotors of the port device. Preferably, such ratio will be in the range of from about 2 to about 15.

A port device according to the invention can be operated in various positions from horizontal to vertical as long as gravity does not significantly affect conveying action of the rotors. According to an embodiment preferred for many purposes, the cavity and the rotors of a port device extend in an essentially vertical direction in the sense that material flow through the port will be downward so that gravitation contributes rather than opposes the conveying action of the first flight portions. Vertical design may provide important benefits, such as compact arrange-ment, an advantageous filling rate independently from the rotor's speed, a most effective venting of the melt upstream of the mixing zone and other benefits of vertical orientation.

As mentioned briefly above, a second general embodiment of the invention is an apparatus or "plant" for processing a stream of a viscous polymer composition to produce an extrudate formed by the polymer composition; such apparatus comprising:
at least one port device as disclosed herein;
at least one processor, e.g. a plasticating extruder and preferably a co-rotating twin screw extruder, arranged in operative upstream connection with the port device (i.e. for generating the plasticated polymer composition that is fed into the port device and generally termed "upstream processor" herein); and
at least one processor, e.g. a production extruder, connected to a shaping means, e.g. as a calender, extrusion die, spinneret, injection mold, press mold, etc., arranged in operative downstream connection (termed "downstream processor" herein) with the port device.

Preferably, the upstream processor is a co-rotating intermeshing self-wiping extruder having a cavity with a diameter such that a ratio of the diameter to the diameter of the elongated cavity of the port device is in the range of from about 1:1 and 1:5.

According to a further general embodiment the invention provides for a method of producing shaped articles made of a polymer composition containing at least one normally solid filler; the method includes providing an apparatus as defined above and shaping the viscous polymer composition containing the filler for obtaining the articles. While any type of filler used in the art is suitable for processing according to the invention, a preferred filler is a particulate filler formed of a relatively brittle material such as mineral glass in the form of glass fibers having an average length of at least about 2 mm, hollow glass spheres, etc..

Consequently, the invention provides shaped articles obtained by the method disclosed herein, for example in the shape of load-bearing panels comprising a polymer composition and a reinforcing filler for achieving a flexural modulus of at least 6000 MPa (10⁶ Pascal), preferably provided with a scratch-resistant and slip-resistant surface.

Finally, the invention provides a method of processing polymer compositions by distributing a reinforcing filler therein comprising the steps of providing a plasticated polymer composition; introducing the plasticated polymer composition into a port device as disclosed herein; adding a reinforcing filler to the plasticated polymer composition in the port device; distributing the reinforcing filler without significant comminution thereof in the plasticated polymer composition by operating the elongated rotors; and discharging the plasticated composition with the reinforcing filler distributed therein.

### BRIEF DESCRIPTION OF THE DRAWINGS

The invention will now be disclosed in more detail with reference to the enclosed drawings representing various non-limiting examples of various embodiments of the invention. In the drawings:
Figure 1 is a diagrammatic sectional view of an embodiment of a port device according to the invention;
Figures 1A and 1B are diagrammatic sectional views of the non-conveying portion of the rotors of a port device as shown in Fig. 1;
Figures 1C and 1D are sectional views to illustrate configuration of the rotors shown in Fig. 1;
Figure 2 is a diagrammatic side view, partially sectioned, of a multicomponent apparatus or plant according to the invention;
Figures 2A, 2B and 2C are diagrammatic side views of various shaping tools at the outlet end of the downstream production extruder shown in Figure 2;
Figure 3 is a diagrammatic side view of another shaping tool for connection with the outlet end of the downstream production extruder of Figure 2;
Figure 4 is a diagrammatic side view of yet another shaping tool for connection with the outlet end of the downstream production extruder of Fig.2;
Figures 5 and 6 are perspective views of preferred products obtained according to the process of the invention; and
Figure 7 is a diagrammatic top view, partially sectioned, of a multicomponent apparatus or plant according to the invention.

### DETAILED DESCRIPTION OF PREFERRED EMBODIMENTS

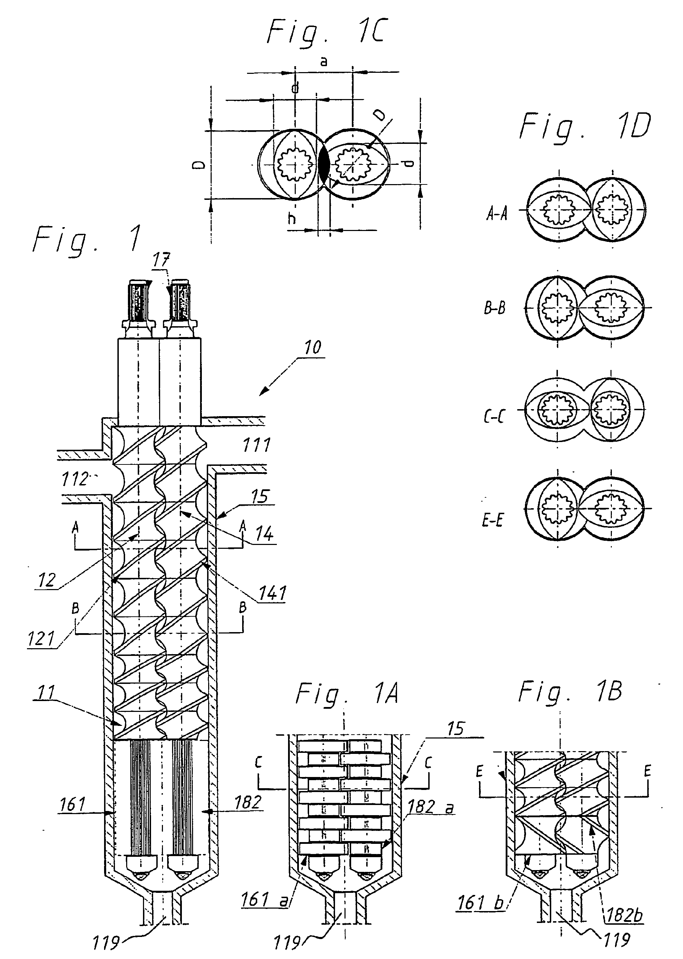

The port device 10 shown in Fig. 1 is illustrated in a diagrammatic and partially sectioned view and comprises a cavity 11 which is the interior space of an enclosure 15 in the form of a housing or barrel for receiving a pair of elongated rotors 12,14 connected at their upper end 17 to a drive (not shown in Fig. 1) and having a first or upper and conveying section 121,141 and a lower or second non-conveying section 161,182 explained below in more detail with reference to in Figs. 1 A and 1B.

A first inlet 112 near the upper end of enclosure 15 serves as a connection for introducing a plasticated polymer or other type of viscous composition delivered by an upstream device (not shown in Fig. 1). A second inlet 111 serves to introduce an additional constituent which may be a liquid or a particulate solid material, typically a filler, delivered, e.g. by a hopper with or without a metering device (not shown in Fig. 1). Outlet 119 is arranged at the lower end of port device 10 for connection with a downstream processor (not shown in Fig. 1).

The non-conveying sections 161,182 of the rotors 12,14 may be formed by a pair of inter-matching kneading sections 161a,182a as illustrated in Fig. 1A or by a pair of inter-matching flight portions 161b, 182b with reversed or negative pitch as illustrated in Fig. 1B.

Fig. 1C illustrates various dimensions, namely the distance "a" between the axes of rotors 12,14; maximum width "D" of the flight sections; minimum width "d" of the flight sections; and the width "h" of the overlap area.

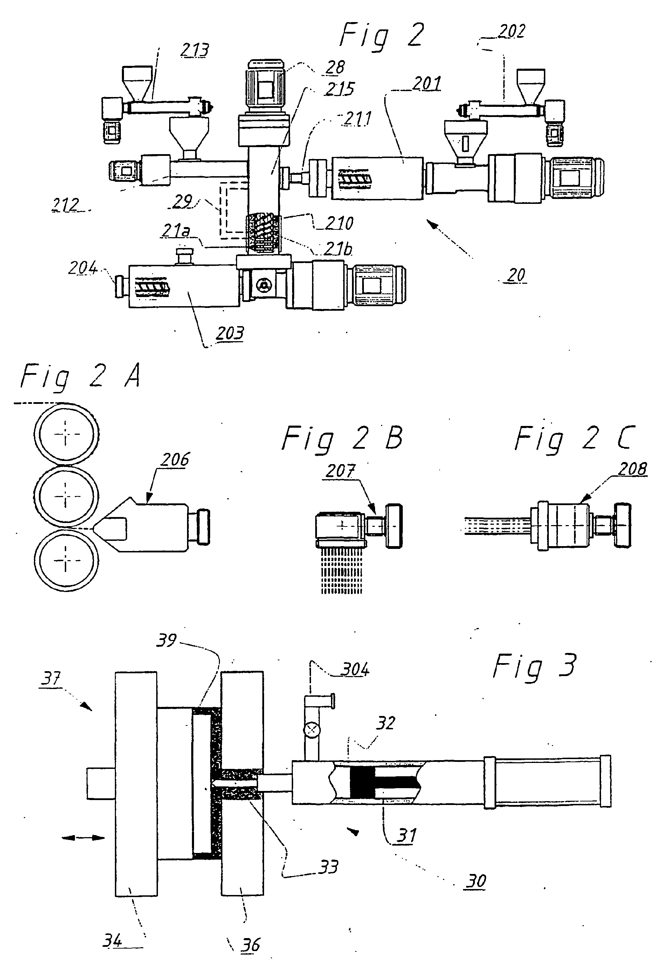

An apparatus or plant 20 representing a strain-controlled mixing system according to the invention is shown diagrammatically in Fig. 2 and comprises a port device 210 as described above formed by a pair of rotors 21a, 21b in an enclosure in the manner disclosed in Fig. 1. Port device 210 is provided with an optional re-circulating conduit 29 indicated in broken lines and including conventional flow control means (not shown) for regulating the degree of re-circulation, if any.

Plasticated feed composition is produced in upstream processor 201, preferably an extruder fed by a conventional metering device 202 and being in operative connection with port device 210 via inlet 211. A filler, e.g. a reinforcing or non-reinforcing filler and/or a pigment, or another constituent of the product to be processed by downstream processor 203 is added by a second upstream conveyor 212 fed by another conventional metering device 213.

Port device 210 includes a drive 28 and is in operative connection with downstream processor 203, e.g. a conventional production processor. The outlet end 204 thereof may be connected to any output device, e.g. a combination 206 of a slit die plus calender as shown in Fig. 2A, a spin-die manifold or spinneret 207 as shown in Fig. 2B, a shaping die 208 as shown in Fig. 2C or another type of product-shaping device known in the art of polymer processing.

Another type of a process output device for connection with the output end 204 of downstream extruder 203 of Fig. 2 is shown diagrammatically in Fig. 3. Device 30 receives the completely compounded plasticated polymer composition produced in port device 210 via downstream extruder 203 by means of connector 304 and includes an injection press formed by barrel 32 and a reciprocating ram or piston 31 for injection into a molding machine 37 formed between two press plates 34,36 and a conventional mold 39. Drive means for operating ram 31 and molding machine 37 are needed, of course, for operation but are omitted in Fig. 3 for reasons of simplicity.

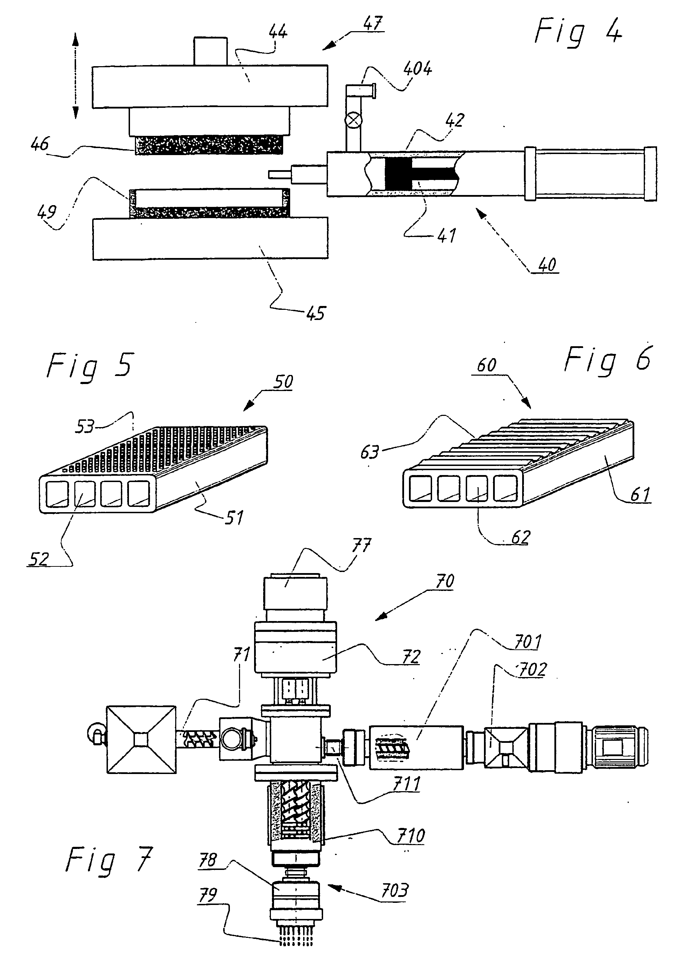

A similar process output device 40 is shown diagrammatically in Fig. 4 where, again, the output material from downstream processor 203 of Fig. 2 is fed via connector 404 into an injection press of similar construction as shown in Fig. 3, i.e. with a barrel 42 and a reciprocating ram or piston 41 arranged therein. The viscous composition is introduced into a molding press 47 formed by an upper die 46 and a lower die 49 between platens 44, 45 which are operated in a reciprocating fashion by a drive (not shown).

Fig. 5 and Fig. 6 are perspective views of a fiber-reinforced load-bearing panel 50 and 60, respectively, formed of a polymer composition, e.g. on the basis of recycled polypropylene and containing a reinforcing filler, e.g. glass fibers of the type mentioned above. Panels 50,60 are formed by a shell 51, 61 that encloses four parallel longitudinal tunnels 52,62. Panels of this type are known per se, e.g. from WO 00/31356 incorporated herein for further details. Very high strength parameters can be achieved, e.g. a flexural modulus of at least 6000 MPa. Preferably and according to the present invention, the top faces are made wear-resistant by inclusion of small solid glass spheres in the polymer composition used for the top coating of both as well as slip-resistant by embossing the top face 53 in a dome-shaped fashion or top face 63 in a cross-ribbing fashion.

As will be apparent from the above explanation of the SCM system according to the invention, improved admixing of reinforcing filler according to the present invention provides for improved product quality and/or economy.

Fig. 7 shows a further embodiment of an apparatus 70 for strain controlled mixing, e.g. in the production of masterbatch materials or pigment concentrates. The upstream processor 701, preferably a plasticating extruder fed by a conventional metering device 702 is in an operative connection with port device 710 via inlet 711. A metering device 71 is used to introduce a liquid or solid constituent, e.g. a stabilizer, pigment or other conventional component for polymer processing into port 710. It should be noticed that in the case of introducing a gas, such as nitrogen, for mixing into a polymeric viscous composition in the port device, such gas should be fed by a conventional gas nozzle in a position of the elongated cavity (11) which is close to the non-conveying zone (161, 182) in order to avoid gas escape as it is well know to the skilled persons in the art of producing products based on foamed polymeric compositions. Drive and gear means 77,72 are provided for operation of port device 710, the output of which is fed into a conventional strand die group 703 for further pelletizing.

### EXAMPLES

### Example 1

Recycled polypropylene was plasticated in the upstream processor (screw diameter 45 mm, length 25 D) of an apparatus as shown in Fig. 2 and introduced into the port device (a co-rotating, fully intermeshing self-wiping twin screw; screw diameter 60mm, length 10D and a non-conveying end portion as shown in 1B) as a plasticated polymer composition under operating conditions for plastication. Chopped glass fibers with an initial length of about 8 to 10 mm were added by a metering device so as to make up about 30% by weight of the final composition that is passed from the port device to the downstream processor and from there into an extrusion head and, further downstream, into a calibration section for producing structural panels having a rigidity of above 7'000 MPa.

### Example 2

Commercial linear low density polyethylene (LLDPE) was plasticated in the upstream processor of an apparatus as shown in Fig. 2 and as specified in Example 1 and introduced into the port device (non-conveying end portion as shown in Fig. 1A) as a plasticized polymer composition. Micronized calcium carbonate was added by a metering device so as to make up about 50% by weight of the final composition that is passed from the port device to the downstream processor equipped for producing high filled stretchable film.

The product film obtained had a very good appearance and was capable of passing water vapor after stretching (up to about 3.5 times its length in unstretched state).

### Example 3

A series of tests were made with a port device as shown in Fig. 1 having a D/d ratio (ratio of inner barrel diameter to the same value reduced by twice screw depth) of 1.72 and a vertical arrangement. Different polymer melt compositions were processed at various speeds, residence times and mixing volumes according to the specific task to be achieved. The results are displayed in Table 1.

**Table 1 (Screw diameter 60 mm)**

| Case No. | Mixing axial length | Mixing Volume | Filling rate in the mixing section | Volumetric flow rate | Throughput | Mixing Time | Mixer speed | Av. Shear Rate | Av. Shear Strain | Comp arativ e strain |
|---|---|---|---|---|---|---|---|---|---|---|
| | (m) | (m³) | | (m³/s) | (kg/hr) | (s) | (rpm) | (s⁻¹) | (Strain Units)* | |
| 1 | 0.10 | 0.00018 | 1 | 0.0000029 | 10 | 62 | 10 | 2,5 | 155 | 1 |
| 2 | 0.15 | 0.00027 | 1 | 0.0000029 | 10 | 94 | 10 | 2,5 | 235 | 1,51 |
| 3 | 0.20 | 0.00036 | 1 | 0.0000029 | 10 | 124 | 10 | 2,5 | 310 | 2 |
| 4 | 0.10 | 0.00018 | 1 | 0.0000029 | 10 | 62 | 20 | 5 | 310 | 2 |
| 5 | 0.10 | 0.00018 | 1 | 0.0000029 | 10 | 62 | 30 | 7,5 | 465 | 3 |
| 6 | 0.10 | 0.00018 | 1 | 0.00001462 | 50 | 12 | 30 | 7,5 | 90 | 0,58 |
| 7 | 0.10 | 0.00036 | 1 | 0.0000029 | 10 | 124 | 200 | 50 | 6200 | 40 |

| | | | | | | | | | | |
|---|---|---|---|---|---|---|---|---|---|---|
| * The actual shear rate was calculated for a screw channel depth of 12,5 mm and the comparative shear strain was calculated by dividing all values for the case 1 value. | | | | | | | | | | |

While various embodiments have been disclosed and illustrated above in some detail it is to be emphasised that such detailed disclosure relates to non-limiting examples so that various modifications and changes will be obvious. For example, while temperature and pressure conditions of operation have not been explained in detail, it will be apparent that viscosity is a temperature-dependent parameter but that operating temperatures must not cause decomposition. Further, it is well known that operation of screw-type processors tends to generate heat, due to the viscous heat dissipation which occurs parallel to mixing, so that cooling and/or heating means may be required for optimum operation of the invention. Various other operating parameters are known to be of practical importance for commercial operation and have not discussed herein for reasons of brevity. Thus, the scope of the invention is to be determined by construeing the subsequent claims with the knowledge of those experienced in the art of polymer processing.

## Claims

1. An apparatus for admixing a viscous composition with at least one additional constituent selected from fillers, fibers, pigments, color concentrates and gases; said apparatus comprising an upstream plasticating extruder (201, 701) for producing a stream of a viscous polymer composition and a downstream processor for receiving said stream and for introducing said additional constituent, said downstream processor being a port device (10) for receiving said viscous composition from said upstream plasticating extruder and for admixing said at least one additional constituent therewith, said port device comprising:
an elongated cavity (11) formed by an enclosure (15) and having a length and a diameter (D), and including
a first inlet (112) for introducing said viscous composition into said port; and
at least one second inlet (111) for introducing said at least one additional constituent; and
an outlet end (119) downstream of said first and said second inlet for connecting said port device with a processor;
a pair of elongated rotors (12, 14) for co-rotation within said cavity (11);
said elongated rotors each having
a first and mutually inter-matching flight portion (121; 141) closely fitting into said cavity (11) and being adapted to forcingly convey said viscous composition and said at least one additional constituent distributed therein through said cavity (11) towards said outlet end (119) thereof;
and at least one non-conveying portion (161; 182) downstream of each of said first portions (121; 141) adapted to improve said distribution of said at least one additional constituent in said viscous composition;
wherein said diameter (D) of said cavity (11) is about 1 to 5 times greater than the diameter of the upstream plasticating extruder, and wherein said cavity has a length:diameter ratio in the range of from about 2 to about 20.

2. The apparatus of claim 1, wherein said first conveying flight portion (121; 141) of each of said rotors (12; 14) is formed by a first helical scraping flight portion having a positive pitch.

3. The apparatus of claims 1 or 2, wherein said non-conveying portion (161; 182) of each of said intermeshing rotors (12; 14) is formed by a kneading element section (161a; 182a).

4. The apparatus of claims 1 or 2, wherein said non-conveying flight portion (161; 182) of each of said intermeshing rotors (12; 14) is formed by a second helical scraping flight section (161b; 182b) having a negative pitch.

5. The apparatus of any of claims 1-4, wherein said elongated cavity (11) formed by said enclosure (15) extends in an essentially vertical direction.

6. The apparatus of any of claims 1- 5 for processing said stream of said viscous composition to produce an extrudate formed by said viscous composition and a filler, fiber or pigment admixed therewith, said apparatus additionally comprising:
at least one processor (203; 703) arranged in operative downstream connection with said port device for producing a shaped product.

7. The apparatus of claim 6, wherein said at least one processor (203; 30; 40; 703) arranged in operative downstream connection with said port device has an output means (206; 207; 208; 37; 47; 703) for shaping said viscous composition emanating from said port device.

8. The apparatus of any of claims 6 - 7, wherein said plasticating extruder (201; 701) arranged in said upstream connection with said port device is a co-rotating intermeshing self-wiping extruder.

9. A method for strain-controlled mixing of a viscous composition with at least one additional constituent selected from fillers, fibers, pigments, color concentrates and gases, said method comprising the steps of producing a stream of a viscous polymer composition in a plasticating extruder (201; 701) and feeding said stream into a downstream processor for admixture with said at least one additional constituent; wherein said downstream processor is a port device (10) for receiving said viscous composition from said plasticating extruder, said port device comprising:
an elongated cavity (11) formed by an enclosure (15) and having a length and a diameter (D), and including
a first inlet (112) for introducing said viscous composition into said port; and
at least one second inlet (111) for introducing said at least one additional constituent; and
an outlet end (119) downstream of said first and said second inlet for connecting said port device with a processor;
a pair of elongated rotors (12; 14) for co-rotation within said cavity (11);
said elongated rotors each having
a first and mutually inter-matching flight portion (121; 141) closely fitting into said cavity (11) and being adapted to forcingly convey said viscous composition and said at least one additional constituent distributed therein through said cavity (11) towards said outlet end (119) thereof;
and at least one non-conveying portion (161; 182) downstream of each of said first portions (121; 141) adapted to improve said distribution of said at least one additional constituent in said viscous composition;
and operating said port device for maximizing distributive effects while maintaining dispersing effects between zero and maximum.

10. The method of claim 9 for producing shaped articles made of a polymer composition containing at least one filler; comprising the step of feeding the mixture obtained into a downstream processor (203; 30; 40; 703) for producing a shaped article from said mixture.

11. The method of claim 10, wherein said filler is a particulate reinforcing filler, such as glass fibers having an average length of at least 2 mm.

12. A shaped article obtained by the method of any of claims 10 - 11, which is a load-bearing panel (50; 60) comprising polypropylene as said polymer composition and containing about 30% by weight of chopped glass fibers with an initial length of about 8 - 10 mm as said reinforcing filler for obtaining a flexural modulus of at least 6000 MPa.

13. The shaped article of claim 12, wherein said load-bearing panel has a wear-resistant and slip-resistant surface.

14. A shaped article obtained by the method of claim 10, which is a stretchable film comprising LLDPE and about 50% by weight of micronized calcium carbonate.

## Patentansprüche

1. Vorrichtung zum Vermischen einer viskosen Masse mit mindestens einem zusätzlichen Bestandteil, der gewählt ist aus Füllern, Fasern, Pigmenten, Farbkonzentraten und Gasen, wobei die Vorrichtung einen aufstromseitigen Plastifizier-Extruder (201, 701) zur Erzeugung eines Stroms aus einer viskosen Polymermasse und einen abstromseitigen Prozessor zur Aufnahme des Stroms und zur Einführung des zusätzlichen Bestandteils umfasst, wobei der abstromseitige Prozessor eine Schleuseneinrichtung (10) zur Aufnahme der viskosen Masse aus dem aufstromseitigen Plastifizier-Extruder und zum Einmischen des mindestens einen zusätzlichen Bestandteils ist, wobei die Schleuseneinrichtung umfasst:
einen länglichen Hohlraum (11), der von einer Umschliessung (15) gebildet ist und eine Länge und
einen Durchmesser (D) aufweist und der umfasst:
einen ersten Einlass (112) zum Einführen der viskosen Masse in die Schleuseneinrichtung; und
mindestens einen zweiten Einlass (111) zum Einführen des mindestens einen zusätzlichen Bestandteils; und
ein Auslassende (119) abstromseitig vom ersten und zweiten Einlass zum Verbinden der Schleuseneinrichtung mit einem Prozessor,
zwei längliche Rotoren (12, 14) zur Ko-Rotation im Inneren des Hohlraums (11), wobei die länglichen Rotoren jeweils aufweisen:
einen ersten und ineinander passenden Schneckenbereich (121; 141), der dem Hohlraum (11) genau angepasst und zur Zwangsförderung der viskosen Masse und des darin verteilten mindestens einen zusätzlichen Bestandteils durch den Hohlraum (11) zu dessen Auslassende (119) ausgebildet ist; und
mindestens einen nichtfördernden Bereich (161; 182) abstromseitig von jedem der ersten Bereiche (121; 141), um die Verteilung des mindestens einen zusätzlichen Bestandteils in der viskosen Masse zu optimieren;
wobei der Durchmesser (D) des Hohlraums (11) etwa 1 bis 5 mal grösser als der Durchmesser des aufstromseitigen Plastifizier-Extruders ist und der Hohlraum ein Länge:Durchmesser-Verhältnis im Bereich von etwa 2 bis etwa 20 aufweist.

2. Vorrichtung nach Anspruch 1, bei der der erste Schneckenbereich (121; 141) der Rotoren (12; 14) jeweils von einem ersten spiralförmigen, schabenden Schneckenbereich mit positivem Gang gebildet ist.

3. Vorrichtung nach Anspruch 1 oder 2, bei der der nichtfördernde Bereich (161; 182) jedes der ineinander passenden Rotoren (12; 14) von einem Knetelementbereich (161a; 182a) gebildet ist.

4. Vorrichtung nach Anspruch 1 oder 2, bei der der nichtfördernde Schneckenbereich (161; 182) jedes der ineinander passenden Rotoren (12; 14) von einem zweiten spiralförmigen, schabenden Schneckenbereich (161b; 182b) mit negativem Gang gebildet ist.

5. Vorrichtung nach einem der Ansprüche 1 - 4, bei der sich der von der Umschliessung (15) gebildete längliche Hohlraum (11) in einer praktisch senkrechten Richtung erstreckt.

6. Vorrichtung nach einem der Ansprüche 1 - 5 zur Verarbeitung des Stroms aus der viskosen Masse zur Erzeugung eines Extrudats, das aus der viskosen Masse und beigemischtem Füller, Fasermaterial oder Pigment gebildet ist, wobei die Vorrichtung zusätzlich umfasst:
mindestens einen Prozessor (203; 703) in abstromseitiger Arbeitsverbindung mit der Schleuseneinrichtung zur Herstellung eines geformten Produktes.

7. Vorrichtung nach Anspruch 6, bei der der mindestens eine Prozessor (203; 30; 40; 703), der abstromseitig in Arbeitsverbindung mit der Schleuseneinrichtung steht, eine Austragvorrichtung (206; 207; 208; 37; 47; 703) zur Formung der aus der Schleuseneinrichtung austretenden viskosen Masse hat.

8. Vorrichtung nach einem der Ansprüche 6 - 7, bei der der Plastifizier-Extruder (201; 701), der aufstromseitig mit der Schleuseneinrichtung verbunden ist, ein ko-rotierender Extruder mit ineinander passenden selbstreinigenden Schnecken ist.

9. Verfahren zum belastungsgesteuerten Vermischen einer viskosen Masse mit mindestens einem zusätzlichen Bestandteil, der gewählt ist aus Füllern, Fasern, Pigmenten, Farbstoffkonzentraten und Gasen, wobei das Verfahren die Schritte der Erzeugung eines Stroms einer viskosen Polymermasse in einem Plastifizier-Extruder (201; 701) und der Zuführung des Stroms in einen stromabwärts angeordneten Prozessor zum Vermischen mit mindestens einem zusätzlichen Bestandteil umfasst;
wobei der stromabwärts angeordnete Prozessor eine Schleuseneinrichtung (10) zur Aufnahme der viskosen Masse aus dem Plastifizier-Extruder ist, wobei die Schleuseneinrichtung umfasst:
einen länglichen Hohlraum (11), der aus einer Umschliessung (15) gebildet ist,
eine Länge und einen Durchmesser (D) hat und umfasst:
einen ersten Einlass (112) zur Einführung der viskosen Masse in die Schleuseneinrichtung; und
mindestens einen zweiten Einlass (111) zur Einführung des mindestens einen zusätzlichen Bestandteils; und
ein abstromseitig vom ersten und zweiten Einlass angeordnetes Auslassende (119) zur Verbindung der Schleuseneinrichtung mit einem Prozessor;
zwei längliche Rotoren (12; 14) zur Ko-Rotation im Innern des Hohlraums (11); wobei die Rotoren jeweils aufweisen:
einen ersten und ineinander passenden Scheckenbereich (121; 141), der dem Hohlraum (11) genau angepasst und zur Zwangsförderung der viskosen Masse und des mindestens einen darin verteilten zusätzlichen Bestandteils durch den Hohlraum (11) zu dessen Auslassende (119) ausgebildet ist; und
mindestens einen nichtfördernden Bereich (161; 182) abstromseitig von jedem der ersten Bereiche (121; 141), um die Verteilung des mindestens einen zusätzlichen Bestandteils in der viskosen Masse zu optimieren;
und Betreiben der Schleuseneinrichtung zur Maximierung von distributiven Effekten, während die dispersiven Effekte zwischen Null und dem Maximum gehalten werden.

10. Verfahren nach Anspruch 9 zur Herstellung von geformten Artikeln aus einer mindestens einen Füller enthaltenden Polymermasse, das den Schritt der Zuführung des erhaltenen Gemischs in einen abstromseitigen Prozessor (203; 30; 40; 703) zur Herstellung der geformten Artikel aus dem Gemisch umfasst.

11. Verfahren nach Anspruch 10, bei dem der Füller ein teilchenförmiger Armierungsfüller ist, wie Glasfasern mit einer mittleren Länge von mindestens 2 mm.

12. Geformter Artikel, erhalten nach dem Verfahren gemäss einem der Ansprüche 10 - 11, der eine tragende Platte (50; 60) ist, die Polypropylen als Polymermasse und etwa 30 Gew.% von Kurzglasfasern mit einer Anfangslänge von etwa 8 - 10 mm als armierenden Füller enthält, um ein Biegemodul von mindestens 6000 MPa zu erzielen.

13. Geformter Artikel nach Anspruch 12, bei dem die tragende Platte eine abriebfeste und rutschfeste Oberfläche aufweist.

14. Geformter Artikel, erhalten nach dem Verfahren gemäss Anspruch 10, der eine dehnbare Folie ist, die LLDPE und etwa 50 Gew.-% mikronisiertes Calciumcarbonat enthält.

## Revendications

1. Appareil pour mélanger une composition visqueuse avec au moins un constituant supplémentaire choisi parmi des charges, des fibres, des pigments, des concentrés de couleur et des gaz; ledit appareil comprenant une extrudeuse plastifiante en amont (201, 701) pour la production d'un courant d'une composition polymère visqueuse et un transformeur en aval pour recevoir ledit courant et pour introduire ledit constituant supplémentaire, ledit transformeur en aval étant un dispositif à orifice (10) pour recevoir ladite composition visqueuse à partir de ladite extrudeuse plastifiante en amont et pour mélanger ledit au moins un constituant supplémentaire avec celle-ci, ledit dispositif à orifice comprenant:
une cavité allongée (11) formée par un boîtier (15) et possédant une longueur et
un diamètre (D) et incluant:
une première entrée (112) pour introduire ladite composition visqueuse dans ledit orifice; et au moins une deuxième entrée (111) pour introduire ledit au moins un constituant supplémentaire; et
une extrémité de sortie (119) en aval de ladite première et de ladite deuxième entrées pour relier ledit dispositif à orifice avec un transformeur;
une paire de rotors allongés (12, 14) pour une co-rotation dans ladite cavité (11);
lesdits rotors allongés possédant chacun:
une première portion de filets mutuellement inter-appariés (121, 141) s'emboîtant étroitement dans ladite cavité (11) et étant adaptée pour convoyer par force ladite composition visqueuse et ledit au moins un constituant supplémentaire distribués à l'intérieur à travers ladite cavité (11) vers ladite extrémité de sortie (119) de celle-ci;
et au moins une portion non convoyeuse (161, 182) en aval de chacune desdites premières portions (121, 141) adaptée pour améliorer ladite distribution dudit au moins un constituant supplémentaire dans ladite composition visqueuse;
dans lequel ledit diamètre (D) de ladite cavité (11) est environ de 1 à 5 fois plus élevé que le diamètre de l'extrudeuse plastifiante en amont, et dans lequel ladite cavité possède un rapport longueur:diamètre dans l'intervalle d'environ 2 à environ 20.

2. Appareil suivant la revendication 1, dans lequel ladite première portion de filets convoyeuse (121, 141) de chacun desdits rotors (12, 14) est formée par une première portion de filets racleurs hélicoïdaux avec un pas positif.

3. Appareil suivant la revendication 1 ou 2, dans lequel ladite portion non convoyeuse (161, 182) de chacun desdits rotors engrenants (12, 14) est formée par une section d'éléments malaxeurs (161a, 182a).

4. Appareil suivant la revendication 1 ou 2, dans lequel ladite portion de filets non convoyeuse (161, 182) de chacun desdits rotors engrenants (12, 14) est formée par une deuxième section de filets racleurs hélicoïdaux (161b, 182b) avec un pas négatif.

5. Appareil suivant l'une quelconque des revendications 1-4, dans lequel ladite cavité allongée (11) formée par ledit boîtier (15) s'étend dans une direction essentiellement verticale.

6. Appareil suivant l'une quelconque des revendications 1-5, pour la transformation dudit courant de ladite composition visqueuse pour donner un produit d'extrusion formé par ladite composition visqueuse et une charge, une fibre ou un pigment mélangé avec celle-ci, ledit appareil comprenant en outre:
au moins un transformeur (203, 703) arrangé dans une liaison opérationnelle en aval avec ledit dispositif à orifice pour donner un produit façonné.

7. Appareil suivant la revendication 6, dans lequel ledit au moins un transformeur (203, 30, 40, 703) arrangé dans une liaison opérationnelle en aval avec ledit dispositif à orifice possède un dispositif de sortie (206, 207, 208, 37, 47, 703) pour façonner ladite composition visqueuse émanant dudit dispositif à orifice.

8. Appareil suivant l'une quelconque des revendications 6-7, dans lequel ladite extrudeuse plastifiante (201, 701) arrangée dans ladite liaison en amont avec ledit dispositif à orifice est une extrudeuse à essuyage automatique engrenante co-rotative.

9. Procédé pour le mélange à contrainte régulée d'une composition visqueuse avec au moins un constituant supplémentaire choisi parmi des charges, des fibres, des pigments, des concentrés de couleur et des gaz, ledit procédé comprenant les étapes de production d'un courant d'une composition polymère visqueuse dans une extrudeuse plastifiante (201, 701) et d'alimentation dudit courant dans un transformeur en aval pour un mélange avec ledit au moins un constituant supplémentaire, dans lequel ledit transformeur en aval est un dispositif à orifice (10) pour recevoir ladite composition visqueuse à partir de ladite extrudeuse plastifiante, ledit dispositif à orifice comprenant:
une cavité allongée (11) formée par un boîtier (15) et possédant une longueur et
un diamètre (D) et incluant:
une première entrée (112) pour introduire ladite composition visqueuse dans ledit orifice; et au moins une deuxième entrée (111) pour introduire ledit au moins un constituant supplémentaire; et
une extrémité de sortie (119) en aval de ladite première et de ladite deuxième entrées pour relier ledit dispositif à orifice avec un transformeur;
une paire de rotors allongés (12, 14) pour une co-rotation dans ladite cavité (11); lesdits rotors allongés possédant chacun:
une première portion de filets mutuellement inter-appariés (121, 141) s'emboîtant étroitement dans ladite cavité (11) et étant adaptée pour convoyer par force ladite composition visqueuse et ledit au moins un constituant supplémentaire distribués à l'intérieur à travers ladite cavité (11) vers ladite extrémité de sortie (119) de celle-ci;
et au moins une portion non convoyeuse (161, 182) en aval de chacune desdites premières portions (121, 141) adaptée pour améliorer ladite distribution dudit au moins un constituant supplémentaire dans ladite composition visqueuse;
et de fonctionnement dudit dispositif à orifice pour maximiser les effets de distribution tout en maintenant les effets de dispersion entre zéro et un maximum.

10. Procédé suivant la revendication 9, pour la production d'articles façonnés faits d'une composition polymère contenant au moins une charge, comprenant l'étape d'alimentation du mélange obtenu dans transformeur en aval (203, 30, 40, 703) pour produire un article façonné à partir dudit mélange.

11. Procédé suivant la revendication 10, dans lequel ladite charge est une charge de renforcement particulaire, telle que des fibres de verre présentant une longueur moyenne d'au moins 2 mm.

12. Article façonné obtenu par le procédé suivant l'une quelconque des revendications 10-11, qui est un panneau porteur (50, 60) comprenant un polypropylène en tant que ladite composition polymère et contenant environ 30% en poids de fibres de verre découpées avec une longueur initiale d'environ 8-10 mm en tant que ladite charge de renforcement pour l'obtention d'un module de flexion d'au moins 6000 MPa.

13. Article façonné suivant la revendication 12, dans lequel ledit panneau porteur présente une surface résistant à l'usure et résistant au glissement.

14. Article façonné obtenu par le procédé suivant la revendication 10, qui est un film étirable comprenant un LLDPE et environ 50% en poids de carbonate de calcium micronisé.
